# FASCICULE DE BREVET EUROPEEN

(11) **EP 1 992 118 B1**
(45) Date de publication et mention de la délivrance du brevet: **14.09.2011**
(21) Numéro de dépôt: 07731704.8
(22) Date de dépôt: 07.03.2007
(51) Int. Cl.: H04L 12/28, H04L 29/08, G06F 17/30

(54) **DISPOSITIF DE COMMUNICATION ET BASE POUR UN AFFICHAGE EVOLUE**
KOMMUNIKATIONSVORRICHTUNG UND BASIS FÜR ERWEITERTE ANZEIGE
COMMUNICATION DEVICE AND BASE FOR AN ADVANCED DISPLAY

(30) Priorité: 07.03.2006 FR 0650790
(43) Date de publication de la demande: 19.11.2008
(73) Titulaire: Thomson Licensing, 92130 Issy-les-Moulineaux (FR)
(72) Inventeur: ROUSSEL, Joris, F-75012 Paris (FR); HUTCHINGS, Cedric, F-92300 Levallois-perret (FR)
(74) Mandataire: Browaeys, Jean-Philippe
(86) Numéro de dépôt international: PCT/FR2007/050888
(87) Numéro de publication internationale: WO 2007/101967

(56) Documents cités:
- WO-A-00/65800
- WO-A-01/43433
- FR-A1- 2 813 736
- US-A1- 2002 105 539
- US-A1- 2003 046 432

## Description

### Domaine de l'invention

La présente invention se rapporte au domaine des télécommunications.

La présente invention se rapporte plus particulièrement à un dispositif de communication et à une base pour l'affichage évolué d'informations.

### Etat de la technique

Le développement des contenus d'information disponibles sur les serveurs distants s'accompagne d'une diversification des sources et des formats de contenu d'une part, et des terminaux permettant l'accès à ce contenu d'autre part.

Les équipements portables obéissent à de fortes contraintes de coût et d'encombrement. Or, ils sont aujourd'hui la cible privilégiée des nouveaux contenus disponibles sur Internet.

Seuls les produits les plus évolués répondent à ces contraintes (mémoire, autonomie, débit) et permettent un rendu de qualité satisfaisante des contenus disponibles.

Les équipements portables ont aujourd'hui des périphériques d'affichage évolués (écran matriciel, multilignes, noir et blanc ou couleur) qui permettent des rendus d'affichage d'information avancés.

Toutefois, ils restent fortement limités par leurs ressources matérielles et doivent répondre à de fortes contraintes de coût.

L'art antérieur connaît, par la demande de brevet américain US 6 920 488 (IBM), un système assisté par un serveur pour accéder à des pages Web depuis un assistant numérique personnel (PDA). Le PDA communique avec l'Internet par l'intermédiaire d'une passerelle Internet sans-fil et un serveur portail capable d'accéder aux ressources d'Internet tels que des serveurs. Le serveur portail comporte une base de données comprenant au moins des informations d'identification permettant de récupérer des champs de pages Web sélectionnés par l'utilisateur, et des moyens de traitement pour accéder aux champs de pages Web sélectionnés. Le PDA comporte des moyens de navigation afin de naviguer dans les champs de pages Web sélectionnés et récupérer au moins l'un d'entre eux ainsi que des moyens d'affichage pour afficher le champ de page Web récupéré.

D'autre document de l'état de l'art, comme les documents WO 01/43433 et US 2002/0105539 décrivent des dispositifs de communication portables pour l'affichage d'informations.

### Exposé de l'invention

L'affichage de contenu distant demande des équipements devant répondre aux contraintes suivantes :
- une mémoire volatile importante pour permettre l'affichage d'information évolué (avec fonctions de cache)
- une connectivité réseau à bande passante élevée pour permettre le transfert de cette information
- un système d'alimentation évolué pour garantir une autonomie suffisante pour son exploitation.

La présente invention se propose de minimiser au maximum ces contraintes tout en garantissant un rendu et une convivialité optimaux à l'utilisateur.

Un des buts de la présente invention est d'optimiser les solutions techniques disponibles, et d'offrir aux équipements à bas coût tels que les combinés DECT une qualité de service équivalente à celle disponible sur des terminaux haut de gamme.

Le problème technique que se propose de résoudre la présente invention consiste à améliorer l'affichage d'informations sur un terminal de communication portable tout en garantissant une consommation réduite en ressources matérielles (mémoire, utilisation du lien radio et consommation énergétique).

A cet effet, la présente invention concerne, dans son acception la plus générale, un dispositif de communication portable muni d'un écran et d'une mémoire vive comportant
- des moyens pour recevoir un flux de données par une liaison radio ;
   caractérisé en ce qu'il comporte
- des moyens pour afficher automatiquement des informations issues du flux de données sur ledit écran, sans requête d'un utilisateur, une partie de ces informations étant stockées en mémoire vive pendant une durée supérieure à la durée de l'affichage ;
- des moyens pour afficher des informations issues du flux de données sur ledit écran, sur requête d'un utilisateur, les informations étant stockées en mémoire vive uniquement pendant la durée de l'affichage.

De préférence, le dispositif de communication portable comporte des moyens pour afficher de façon successive les informations issues du flux de données sur ledit écran, sans requête d'un utilisateur.

Selon un mode de réalisation, le dispositif de communication portable comporte des moyens pour afficher de façon parallèle dans un écran partagé les informations issues du flux de données sur ledit écran, sans requête d'un utilisateur.

Avantageusement, le flux de données reçu de la liaison radio est formaté en fonction d'éléments graphiques et textuels prédéfinis.

Selon un mode de réalisation, le flux de données reçu de la liaison radio est formaté selon deux modèles constitués d'éléments graphiques et textuels prédéfinis, un premier modèle pour l'affichage d'informations sans requête d'un utilisateur et un second modèle pour l'affichage d'informations sur requête d'un utilisateur.

La présente invention se rapporte également à une base apte à communiquer avec un dispositif de communication portable comportant
- des moyens de connexion à un réseau ;
- des moyens de réception de données à travers ledit réseau ;
- des moyens pour recevoir des requêtes par une liaison radio ;
   caractérisé en ce qu'elle comporte
- des moyens de détection de mises à jour d'informations reçues dudit réseau ;
- des moyens pour émettre des données par ladite liaison radio, sans recevoir de requête, en cas de détection de mises à jour d'informations reçues dudit réseau ;
- des moyens pour émettre des données par ladite liaison radio, à réception d'une requête par ladite liaison radio.

De préférence, la base comporte des moyens pour formater un flux de données en provenance dudit réseau.

Avantageusement, le flux de données en provenance dudit réseau est formaté, au niveau de la base, en fonction d'éléments graphiques et textuels prédéfinis.

Selon un mode de réalisation, le formatage du flux de données, au niveau de la base, est réalisé selon deux modèles constitués d'éléments graphiques et textuels prédéfinis, un premier modèle pour l'émission de données sans réception de requête et un second modèle pour l'émission de données sur réception d'une requête.

La mise en oeuvre conjointe d'un point d'accès (PA) agrégateur de contenus complété par une gestion de modèle d'affichage à deux niveaux (veille, actif) suivant le cas d'utilisation de contenu permet d'ajouter des fonctionnalités avancées d'affichage et de navigation dans du contenu provenant de serveurs distants. La présente invention prend, par ailleurs, tout son intérêt dans la possibilité d'utiliser des modèles d'affichage de rendu très différents, tout en optimisant au maximum l'utilisation de la mémoire vive (composant coûteux) et du lien radio afin de garantir la plus grande autonomie possible. Elle permet ainsi d'obtenir un niveau de service proche des produits haut de gamme sur des équipements portables (EP) plus « légers ».

Selon une première variante, un modèle d'affichage est un ensemble d'éléments graphiques et textuels embarqués en permanence dans l'équipement portable en mémoire morte ou data flash.

Selon une seconde variante, un modèle d'affichage est un ensemble d'éléments graphiques et textuels chargés dynamiquement et stockés dans la mémoire vive de l'équipement portable. A ce modèle d'affichage est associé un contenu dynamique, appelé éléments descriptifs du modèle d'affichage, constitué à partir des éléments extraits des flux formatés. Le rendu sur l'écran de l'équipement portable est l'association du contenu dynamique et des règles et éléments du modèle d'affichage correspondant.

### Brève description des dessins

On comprendra mieux l'invention à l'aide de la description, faite ci-après à titre purement explicatif, d'un mode de réalisation de l'invention, en référence aux figures annexées :
- la Figure 1 illustre une architecture pour la mise en oeuvre du procédé selon un exemple de réalisation de la présente invention ;
- la Figure 2 représente un équipement portable ;
- la Figure 3 illustre un mode de réalisation du procédé selon l'exemple de réalisation de la présente invention ; et
- les Figures 4, 5 6 et 7 sont des ordinogrammes illustrant le procédé d'affichage selon l'exemple de réalisation de la présente invention.

### Description détaillée des modes de réalisation de l'invention

Un équipement portable EP est relié grâce à un moyen de communication sans-fil à un point d'accès PA, qui peut communiquer avec des serveurs distants via une connexion réseau.

Selon la présente invention, la notification, l'affichage et le rafraîchissement d'informations dynamiques sont possibles sur l'écran de veille tout en minimisant la mémoire utilisée et la consommation électrique ainsi que l'affichage de contenu plus détaillé à la demande de l'utilisateur.

La présente invention se base sur l'utilisation d'un ensemble de modèles d'affichage dans l'équipement portable afin d'optimiser le rendu de l'information à l'utilisateur tout en diminuant au maximum la consommation en ressources matérielles (mémoire, utilisation lien radio, consommation électrique). Ces modèles d'affichage permettent par ailleurs d'organiser un système d'affichage séquentiel des différentes informations disponibles sans nécessiter de dialogue avec le point d'accès PA. Enfin, ces modèles d'affichage permettent de minimiser au maximum le trafic échangé entre le terminal EP et le point d'accès PA à l'information « utile ».

Le point d'accès PA a pour rôle de récupérer des contenus d'informations depuis les serveurs distants, de détecter les mises à jour depuis une récupération précédente, d'en extraire les données nécessaires, et uniquement celles-là, à la construction des éléments constitutifs des modèles d'affichage.

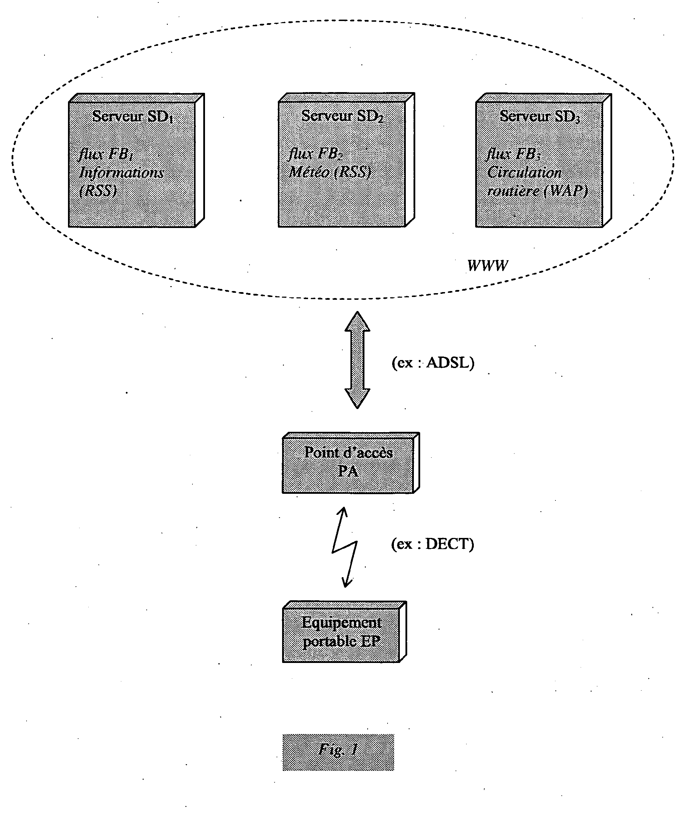

L'architecture générale du système, illustrée Figure 1, est composée des éléments suivants :
- un équipement portable EP connecté, via un lien sans-fil, à
- un point d'accès PA, lui-même relié, via une connexion réseau (par exemple, Ethernet pour réseau local ou ADSL pour Internet), à
- un ensemble de serveurs de contenu distants SDₙ.

La fonction du point d'accès PA peut être remplie par une passerelle résidentielle intégrant une base DECT, mais aussi par un serveur du réseau lorsque le terminal est un combiné GSM. La problématique reste la même. Nous ne faisons donc pas de supposition sur son emplacement.

Dans une approche conventionnelle, l'affichage de données provenant de protocoles évolués (XML, WML, HTML, ...) nécessite soit l'utilisation d'une grande mémoire vive pour stocker l'information sur le terminal EP en vue de son affichage, soit d'un lien données utilisé à chaque fois qu'un rafraîchissement de l'affichage est nécessaire (dans le cas où on minimise les données effectivement stockées dans la mémoire volatile du terminal EP). Ces options sont toutes deux coûteuses, la première en raison du prix élevé des mémoires de grande taille, la deuxième en terme de consommation électrique, et donc d'autonomie du terminal en utilisation mobile.

L'approche alternative proposée dans la présente invention permet de s'affranchir de la divergence des deux problèmes soulevés ci-dessus, c'est à dire minimiser la consommation électrique et le besoin en mémoire vive du terminal EP.

Cette fonctionnalité est remplie par l'introduction de fonctions de « proxy.» dans le point d'accès PA associé au terminal EP et d'un module d'extraction de données utiles dans ce même PA, associé à la mise en place de modèles d'affichage pour rétablir une mise en forme « évoluée » de l'information disponible sur le terminal EP.

Les contenus distribués par les serveurs distants SDₙ sont transportés suivant différents protocoles (XML, RSS, WML, HTML, ...) que le PA interprète pour en extraire l'information utile nécessaire à la constitution des éléments des modèles d'affichage.

A son niveau, le terminal EP n'a pas connaissance du protocole ayant servi de support à l'acheminement du contenu depuis les serveurs distants SDₙ vers le point d'accès PA. Les transferts entre le PA et l'EP se font suivant un seul et unique protocole composé d'une suite d'éléments descriptifs du contenu du modèle d'affichage associé.

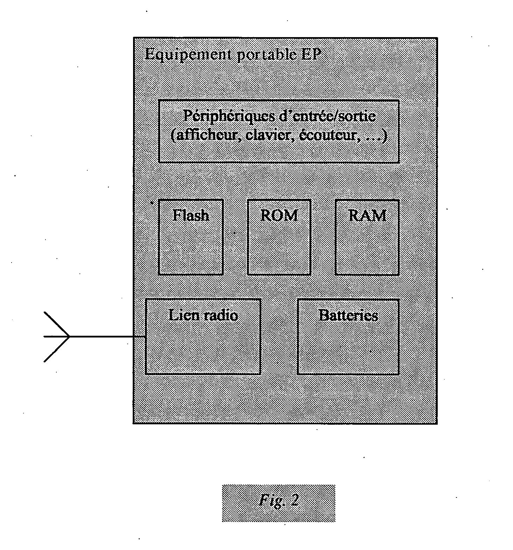

L'équipement portable EP, illustré Figure 2, est constitué en partie des éléments et fonctionnalités suivantes :
- un ensemble de périphériques d'entrée/sortie : afficheur, clavier, haut-parleur
- un processeur (non représenté)
- une mémoire non volatile contenant le code et les données du logiciel assurant le fonctionnement de l'équipement
- une mémoire volatile (RAM) contenant les données « variables » dans le temps
- un lien données sans-fil (pouvant servir de support à la voix dans le cadre d'un téléphone)
- un bloc accumulateur assurant l'alimentation de l'équipement.

Nous distinguons deux états de fonctionnement du terminal EP :
- veille : les contenus sont affichés automatiquement et successivement via des modèles d'affichage de mode veille MAV. Grâce à ce procédé, le terminal, bien qu'en mode « veille », continue d'afficher du contenu obtenu à partir du réseau, mais sans entraîner une activité radio consommatrice en énergie.
- actif : l'utilisateur demande plus d'information sur un contenu particulier. Les nouveaux contenus sont affichés via des modèles d'affichage de mode actif MAA.

Par exemple :
*contenu serveur distant* => *éléments constitutifs MAV* → *éléments constitutifs MAA*
informations => titres → détail des titres
Météo => conditions actuelles → prévisions sur plusieurs jours
Infos routières => état général → cartographie détaillée, précisions sur les conditions
Messageries électronique et vocale => nombre de messages lus, non lus → détail des.messages

Les deux états « veille » et « actif » correspondent à deux mises en oeuvre de communication à base de modèle d'affichage. Ils permettent de scinder l'information en deux parties correspondant à celles qui doivent être stockées dans l'EP pour affichage sur l'écran de veille et celles à n'envoyer à l'EP qu'à la demande de l'utilisateur. Ce niveau supplémentaire de modèle d'affichage permet un niveau supérieur d'optimisation de la gestion de la mémoire et de la consommation du terminal (faible utilisation du lien radio).

Un modèle d'affichage est un ensemble d'éléments graphiques et textuels, certains étant embarqués en permanence dans l'EP (mémoire morte, data flash), d'autres chargés dynamiquement et stockés dans la mémoire vive de l'EP.

Par exemple, un flux RSS transportant des données météorologiques pourra contenir les informations suivantes : date, température, humidité, description, code météo, prévisions, image représentant les conditions actuelles et futures.

Le PA extraira uniquement les informations requises par le modèle d'affichage « Météo » et les enverra à l'EP. Ce dernier ne stockera donc dans la mémoire que les infos dont il a besoin (*température, humidité, code* par exemple).

Le modèle d'affichage (contenu en ROM ou en Flash) peut remettre en forme le contenu d'une façon plus évoluée en introduisant les informations provenant du PA à des éléments graphiques présents dans sa mémoire non volatile.

L'affichage de données météo pour donc être composé des différents éléments textuels (*température, humidité*) et d'un pictogramme associé à l'élément code.

L'utilisateur peut personnaliser l'origine des flux (en fonction des modèles d'affichage disponibles) via une page de configuration dans le PA ou un menu de configuration dans l'EP.

Le point d'accès télécharge un ensemble de flux bruts FB transportés suivant un protocole ou plusieurs protocoles. Il extrait ensuite les informations utiles à la constitution des éléments descriptifs des modèles d'affichage associés et envoie le condensé correspondant aux MAV (modèle d'affichage de mode Veille) à l'EP. Il stocke les éléments descriptifs des MAA (modèle d'affichage en mode actif) localement et ne les transmettra au terminal qu'à la demande de l'utilisateur.

Les éléments constitutifs des MAV sont donc conservés en permanence dans la mémoire vive de l'EP jusqu'au prochain rafraîchissement du flux tandis que les éléments constitutifs des MAA ne sont stockés que le temps de l'affichage d'un contenu donné (défini par l'utilisateur).

Chaque FB (flux brut en provenance de serveurs distants) peut avoir son modèle d'affichage associé.

Chaque modèle d'affichage peut être utilisé pour plusieurs FB.

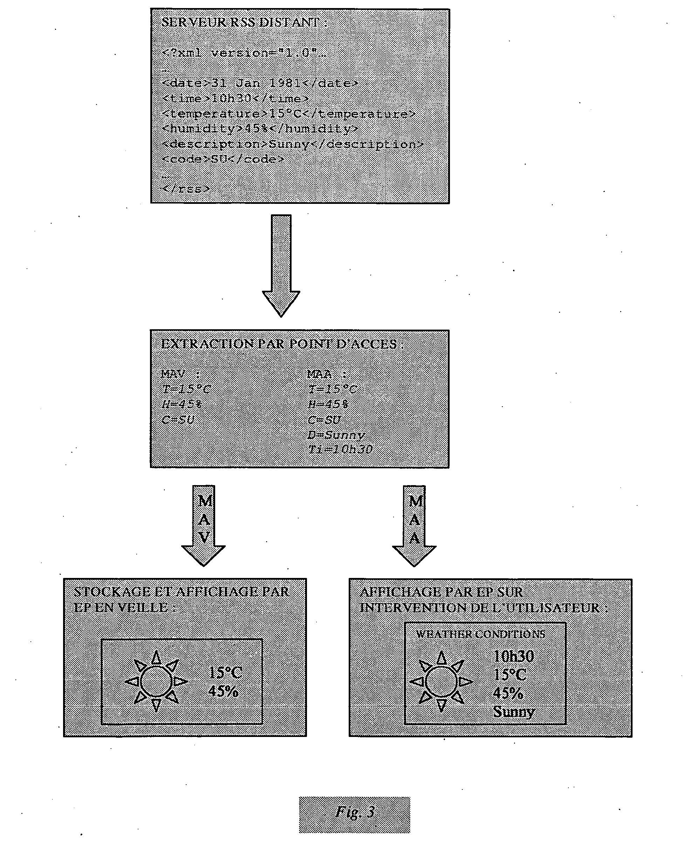

La Figure 3 illustre le procédé d'affichage selon la présente invention avec l'exemple d'un flux RSS contenant des données météorologiques.

Le point d'accès reçoit les données utiles par exemple sous le protocole XML/RSS. Ce flux brut FB contient plusieurs informations non utilisées par le modèle d'affichage MAV (date, time, description, ...) qui en l'état augmenterait de façon significative l'occupation en mémoire vive dans le combiné ainsi que la consommation électrique, cette dernière étant fortement associé à l'utilisation du lien radio pour l'envoi des données et le nécessaire rafraîchissement de la mémoire ne rendrait alors plus possible le stockage d'autres FF (flux formaté).

Si le modèle d'affichage MAV est composé d'une information de température, d'humidité et d'un pictogramme représentant les conditions météorologiques, le PA extrait donc du contenu les attributs *température, humidity* et *code*. L'équipement portable EP construit l'affichage de cette information en écrivant directement les données de température et d'humidité et en associant un pictogramme, stocké dans sa flash ou mémoire morte (ROM), au code reçu. Les éléments constitutifs des modèles d'affichage en mode actif MAA sont aussi extraits et stockés localement dans le PA pour n'être transmis qu'à la demande de l'utilisateur.

La consommation en mémoire vive se retrouve donc réduite à quelques octets au lieu des quelques dizaines nécessaires au stockage du FB entier.

Cette réduction de mémoire permet de stocker en mémoire vive en parallèle plusieurs contenus ayant chacun un modèle d'affichage descriptif. L'EP peut ensuite organiser son écran de veille en affichant successivement ou parallèlement dans un écran partagé ces informations sans demander de mise à jour au PA.

Cette mise à jour aurait été nécessaire si la mémoire vive n'avait pas été suffisante pour stocker ces contenus en parallèle et aurait engendré, ainsi, une surconsommation électrique due à l'utilisation plus fréquente du lien radio.

Grâce à la présente invention, le contenu n'est rafraîchi que lorsque que c'est nécessaire, c'est-à-dire lorsque le PA détecte une mise à jour du flux distant FB et notifie l'EP.

En prenant le cas d'un défilement du contenu toutes les 10s, une solution n'utilisant pas cette invention impliquerait l'ouverture d'une liaison radio toutes ces 10s, ce qui impliquerait alors une surconsommation électrique fortement préjudiciable pour le produit.

Dans une approche classique, la solution serait alors soit :
- d'augmenter l'autonomie électrique via des accumulateurs plus puissants : augmentation drastique de la taille et/ou du coût du produit
- d'augmenter la taille mémoire pour stocker plusieurs flux : surcoût important car les mémoires vives sont des composants coûteux
- de supprimer la possibilité d'afficher séquentiellement et automatiquement différents contenus : baisse de l'intérêt du produit.

La présente invention permet ainsi d'afficher successivement différents contenus, suivant des formats d'affichage différents. Le lien radio n'est alors utilisé que pour les mises à jour des flux, soit, par exemple toutes les demi-heures, d'où une autonomie fortement augmentée.

La diversité des modèles constitue la valeur ajoutée propre du produit aux yeux de l'utilisateur.

Comme exemple de rendu, on pourra retenir :
- météo : pictogramme associé à température et humidité (flux RSS par ex)
- informations : affichage des titres sous forme de bandeau (flux RSS par ex)
- circulation routière : cartographie (site WAP par ex).

Les modèles d'affichage sont indépendants du protocole utilisé par le SD. Le rôle du PA est d'extraire les informations utiles aux modèles d'affichage depuis le flux d'information correspondant et son protocole associé, et de les fournir au terminal EP sur la base d'une connaissance préalable des modèles MAV et MAA du terminal.

Les profils de modèles d'affichage MAV et MAA sont notifiés par le terminal au moment de son enregistrement au PA. Ils sont à la base du « filtre » appliqué par le PA entre le serveur SD et le terminal EP. L'intérêt est une gestion simplifiée du parc de terminaux hétérogènes, dans le cas de la mise à jour d'un terminal EP, par exemple nouveaux profils supportés, ou bien d'ajout d'un nouveau terminal.

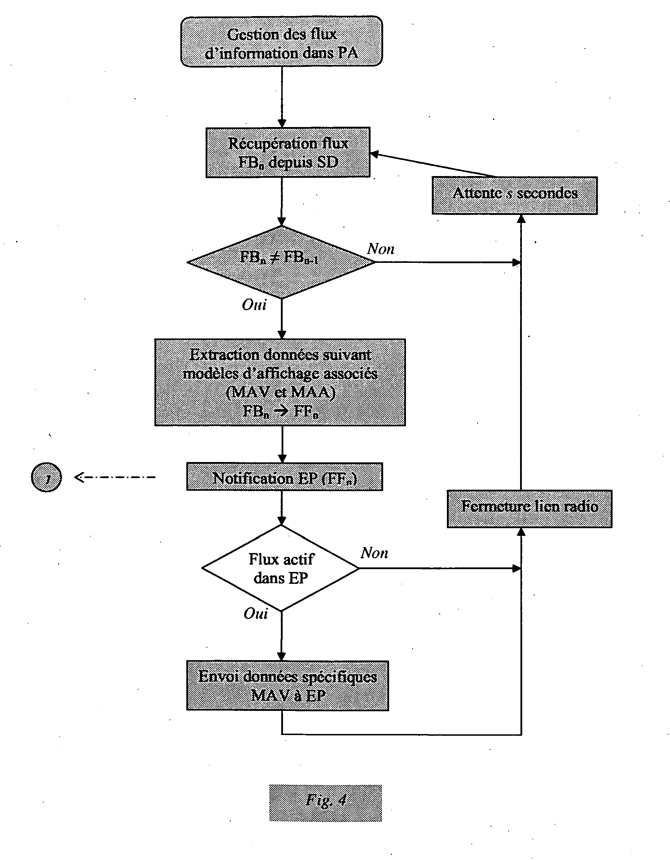

La Figure 4 représente le principe de gestion des flux dans le point d'accès PA.

Avec une périodicité prédéfinie dans le point d'accès PA, ce dernier télécharge les contenus depuis les serveurs distants. Si le flux est différent du précédent (critère de date/heure, checksum, ...), le PA extrait les données nécessaires aux modèles d'affichage associés MAV et MAA (construction du flux formaté FF depuis le flux brut FB) puis notifie l'EP.

Afin de préserver la consommation mémoire du terminal EP et d'éviter les échanges inutiles sur le lien sans-fil, le terminal EP informe le PA si ce flux est activé (activation/désactivation par l'utilisateur). S'il est activé, le PA envoie les informations extraites FF (correspondant au MAV) au terminal et ferme le lien radio.

L'activation/désactivation de l'affichage des FF est effectué par l'utilisateur dans l'EP.

Cette possibilité de configuration, outre la liberté offerte à l'utilisateur de supprimer l'affichage d'informations non demandées, permet au PA de gérer plus de FB que l'EP le permet. A charge à l'EP de limiter le nombre de FF affichables en fonction des disponibilités mémoires via une interface utilisateur appropriée.

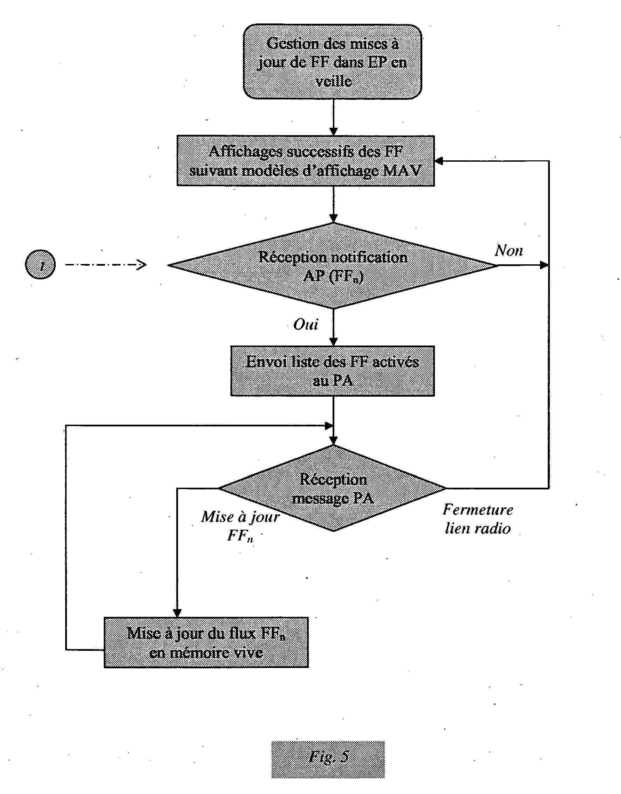

La figure 5 représente le principe de gestion de l'affichage et de la mise à jour des flux formatés FF dans l'EP (en veille).

En veille, le terminal EP affiche successivement les contenus que l'utilisateur a activés en suivant des règles décrites par les modèles d'affichage en veille MAV correspondant.

A la réception d'une notification de mise à jour en provenance du point d'accès PA, l'EP envoie la liste des contenus activés. En réponse, le PA enverra le contenu des MAV modifiés et fermera le lien radio à la fin de la transmission (il le fermera aussitôt si aucun flux à mettre à jour n'est activé).

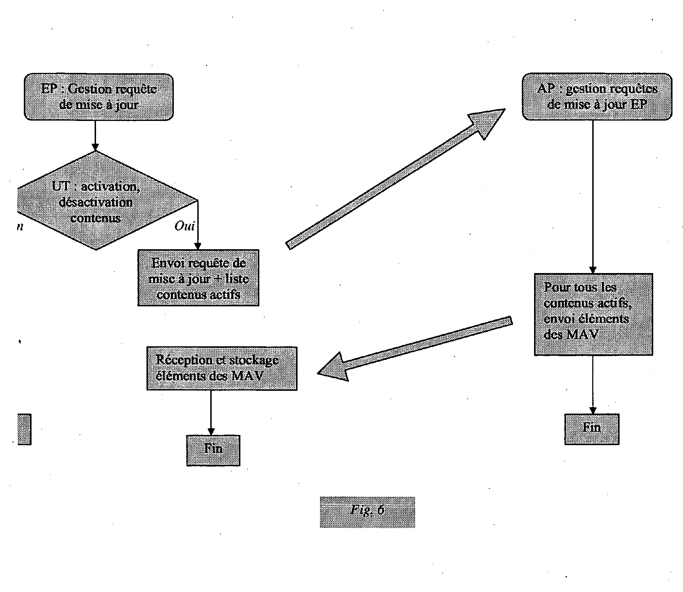

Alternativement, lorsque l'utilisateur activera/désactivera un contenu, l'EP pourra envoyer une requête de mise à jour au PA, comme cela est illustré Figure 6. Le PA renverra alors successivement les mises à jour des contenus correspondants.

Dans le prolongement du mode veille, le mode actif intervient lorsque l'utilisateur (UT) demande des détails sur un contenu affiché. Dans la pratique, il pourrait par exemple, au moment où un contenu est affiché via son MAV, demander le détail du contenu en appuyant sur une touche spécifique.

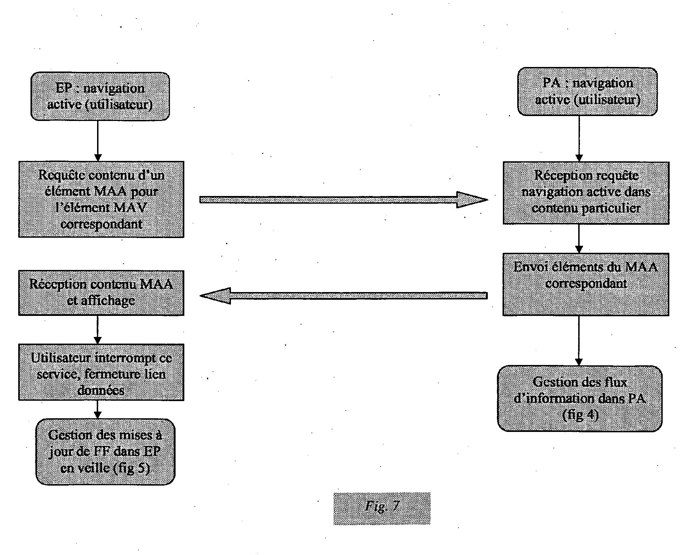

Dans ce cas, illustré Figure 7, le contenu n'est pas stocké dans l'EP pour utilisation future. Il est transféré, affiché et « oublié » dès que l'utilisateur décide d'arrêter sa consultation.

Le terminal retourne ensuite soit dans son état de veille, soit vers un autre contenu.

Un caractère évolutif supplémentaire du produit peut être mis en oeuvre via la mise à jour des profils de modèles d'affichage stockés en Data Flash par l'intermédiaire du lien radio. Cette mise à jour étant exceptionnelle, son impact sur l'autonomie est négligeable.

L'invention est décrite dans ce qui précède à titre d'exemple. Il est entendu que l'homme du métier est à même de réaliser différentes variantes de l'invention sans pour autant sortir du cadre du brevet.

## Revendications

1. Dispositif de communication portable muni d'un écran et d'une mémoire vive comportant
- des moyens pour recevoir un flux de données par une liaison radio ;
**caractérisé en ce qu'**il comporte
- des moyens pour afficher automatiquement des informations issues du flux de données sur ledit écran, sans requête d'un utilisateur, une partie de ces informations étant stockées en mémoire vive pendant une durée supérieure à la durée de l'affichage ;
- des moyens pour afficher des informations issues du flux de données sur ledit écran, sur requête d'un utilisateur, les informations étant stockées en mémoire vive uniquement pendant la durée de l'affichage,
- ledit dispositif étant en outre **caractérisé en ce que** le flux de données reçu de la liaison radio est formaté selon deux modèles constitués d'éléments graphiques et textuels prédéfinis, un premier modèle pour l'affichage d'informations sans requête d'un utilisateur et un second modèle pour l'affichage d'informations sur requête d'un utilisateur.

2. Dispositif de communication portable selon la revendication 1 **caractérisé en ce qu'**il comporte des moyens pour afficher de façon successive les informations issues du flux de données sur ledit écran, sans requête d'un utilisateur.

3. Dispositif de communication portable selon la revendication 1 **caractérisé en ce qu'**il comporte des moyens pour afficher de façon parallèle dans un écran partagé les informations issues du flux de données sur ledit écran, sans requête d'un utilisateur.

4. Base apte à communiquer avec un dispositif de communication portable comportant
- des moyens de connexion à un réseau ;
- des moyens de réception de données à travers ledit réseau ;
- des moyens pour recevoir des requêtes par une liaison radio ;
**caractérisé en ce qu'**elle comporte
- des moyens de détection de mises à jour de données reçues dudit réseau ;
- des moyens pour émettre des données par ladite liaison radio, sans recevoir de requête, en cas de détection de mises à jour de données reçues dudit réseau ;
- des moyens pour émettre des données par ladite liaison radio, à réception d'une requête par ladite liaison radio,
- ladite base étant en outre **caractérisée en ce qu'**elle comporte des moyens pour formater un flux de données en provenance dudit réseau et **en ce que** le formatage du flux de données, au niveau de la base, est réalisé selon deux modèles constitués d'éléments graphiques et textuels prédéfinis, un premier modèle pour l'émission de données sans réception de requête et un second modèle pour l'émission de données sur réception d'une requête.

## Claims

1. Portable communication device equipped with a display screen and a random access memory comprising:
• means for receiving a data stream through a radio link ;
**characterized in that** it comprises:
• means for automatically displaying information (11) from the data stream on said display screen, without any user's request, a part of this information (11) being stored in random access memory during a period of time that is longer than the duration of display;
• means for displaying information (12) from the data stream on said display screen, upon user's request, this information (12) being stored in random access memory during the duration of display only,
• Said device being further **characterized in that** the data stream received from the radio link is formatted according to two models constituted of predefined textual and graphical elements, a first model for the display of information without any user's request and a second model for the display of information upon user request.

2. Portable communication device according to claim 1 **characterised in that** it comprises means for successively displaying information from the data stream on said display screen, without any user's request.

3. Portable communication device according to claim 1 **characterised in that** it comprises means for displaying in parallel, on a split screen, information from a data stream on said display screen, without any user's request.

4. Base adapted to communicate with a portable communication device, comprising :
• means for connecting to a network;
• means for receiving data through said network;
• means for receiving requests through a radio link; **characterized in that** it comprises:
• means for detecting updates of data received through said network;
• means for transmitting data through said radio link, without receiving any request, in case of detection of updates of data received through said network;
• means for transmitting data through said radio link, upon reception of a request through said radio link
said base being further **characterized in that** it comprises means for formatting a data stream received through said network, and **in that** said data stream formatting, at the level of said base, is carried out according to two models constituted of predefined textual and graphical elements, a first model for the transmission of data without reception of a request and a second model for the transmission of data upon reception of a request.

## Patentansprüche

1. Tragbare Kommunikationsvorrichtung mit einem Bildschirm und einem RAM-Speicher, mit:
- Mitteln, um einen Datenfluss über eine Funkverbindung zu empfangen, **dadurch gekennzeichnet, dass** sie Folgendes aufweist:
- Mittel, um Informationen aus dem Datenfluss automatisch ohne Anfrage eines Benutzers an dem Bildschirm anzuzeigen, wobei ein Teil dieser Informationen für eine die Dauer der Anzeige übersteigende Dauer in einem RAM-Speicher gespeichert ist;
- Mittel, um Informationen aus dem Datenfluss auf Anfrage eines Benutzers an dem Bildschirm anzuzeigen, wobei die Informationen lediglich für die Dauer der Anzeige in einem RAM-Speicher gespeichert sind;
- wobei die Vorrichtung ferner **dadurch gekennzeichnet ist, dass** der über die Funkverbindung empfangene Datenfluss gemäß zwei durch vorbestimmte Grafik- und Textelemente gebildeten Modellen formatiert wird, und zwar einem ersten Modell für die Anzeige von Informationen ohne Anfrage eines Benutzers und einem zweiten Modell für die Anzeige von Informationen auf Anfrage eines Benutzers.

2. Tragbare Kommunikationsvorrichtung nach Anspruch 1, **dadurch gekennzeichnet, dass** sie Mittel aufweist, um ohne Anfrage eines Benutzers die Informationen aus dem Datenfluss sukzessive an dem Bildschirm anzuzeigen.

3. Tragbare Kommunikationsvorrichtung nach Anspruch 1, **dadurch gekennzeichnet, dass** sie Mittel aufweist, um ohne Anfrage eines Benutzers die Informationen aus dem Datenfluss parallel an einem geteilten Bildschirm anzuzeigen.

4. Basis, die geeignet ist, mit einer tragbaren Kommunikationsvorrichtung zu kommunizieren, mit:
- Mitteln zum Verbinden mit einem Netz,
- Mitteln, um Daten über das Netz zu empfangen;
- Mitteln, um Anfragen über eine Funkverbindung zu empfangen, **dadurch gekennzeichnet, dass** sie Folgendes aufweist:
- Mittel, um aus dem Netz empfangene Datenaktualisierungen zu detektieren,
- Mittel, um ohne Empfang einer Anfrage Daten über die Funkverbindung auszusenden, wenn aus dem Netz empfangene Datenaktualisierungen detektiert werden,
- Mittel, um bei Empfang einer Anfrage über die Funkverbindung Daten über die Funkverbindung auszusenden,
- wobei die Basis ferner **dadurch gekennzeichnet ist, dass** sie Mittel aufweist, um einen Datenfluss aus dem Netz zu formatieren und dass die Formatierung des Datenflusses an der Basis gemäß zwei durch vorbestimmte Grafik- und Textelemente gebildeten Modellen erfolgt, und zwar einem ersten Modell für das Aussenden von Daten ohne Empfang einer Anfrage und einem zweiten Modell für das Aussenden von Daten bei Empfang einer Anfrage.
